# EUROPÄISCHE PATENTANMELDUNG

(11) **EP 4 019 812 A1**
(43) Veröffentlichungstag der Anmeldung: **29.06.2022**
(21) Anmeldenummer: 21214557.7
(22) Anmeldetag: 14.12.2021
(51) Int. Cl.: F16H 63/34

(54) **PARKSPERRE UND GETRIEBE MIT EINER PARKSPERRE**

(30) Priorität: 17.12.2020 DE 102020216169
(71) Anmelder: Valeo Siemens eAutomotive Germany GmbH, 91056 Erlangen (DE)
(72) Erfinder: Fürstenhöfer, Christian, 91056 Erlangen (DE); Husch, Julia, 91056 Erlangen (DE); Kessler, Niels, 91056 Erlangen (DE); Seemann, Patrick, 91056 Erlangen (DE); Yin, Runtian, 91056 Erlangen (DE)
(74) Vertreter: Novembre, Christophe Adelphe

(57) **Zusammenfassung**

Parksperre (1, 23) für ein Kraftfahrzeug, mit einem bewegbaren Arretierungsmittel zum Beaufschlagen eines im Inneren eines Getriebegehäuses (35) angeordneten Parksperrenrads (3, 32) mit einer Haltekraft, wobei das bewegbare Arretierungsmittel als Sperrbolzen (4, 30) ausgebildet ist, der in eine Ausnehmung des Parksperrenrads (3, 32) bewegbar ist, wobei die Parksperre (1, 23) eine ein Parksperrengehäuse (2, 24) durchsetzende Exzenterwelle (8, 27) aufweist, die durch einen außerhalb des Parksperrengehäuses (2, 24) angeordneten elektrischen Antrieb drehbar ist. Daneben betrifft die Erfindung ein Getriebe (36) mit einer derartigen Parksperre (1, 23).

## Beschreibung

Die Erfindung betrifft eine Parksperre für ein Kraftfahrzeug, mit einem bewegbaren Arretierungsmittel zum Beaufschlagen eines im Inneren eines Getriebegehäuses angeordneten Parksperrenrads mit einer Haltekraft, wobei das bewegbare Arretierungsmittel als Sperrbolzen ausgebildet ist, der in eine Ausnehmung des Parksperrenrads bewegbar ist.

Parksperren, die auch als Parkbremsen bezeichnet werden, werden in steigendem Maße bei Kraftfahrzeugen eingesetzt. Ein bewegbares Arretierungsmittel wirkt dabei auf ein Parksperrenrad, das über Getriebekomponenten mit einem Rad des Kraftfahrzeugs verbunden ist. Im gesperrten Zustand blockiert die Parksperre das Rad des Kraftfahrzeugs.

Bei der in dem Dokument WO 2017/216230 A1 beschriebenen gattungsgemäßen Parksperre sind der Stößel und dessen Antrieb innerhalb eines Getriebegehäuses angeordnet. Der Stößel wirkt mit einem einseitig gelagerten Hebel zusammen, der einen Vorsprung aufweist, der durch eine Betätigung des Stößels in eine Ausnehmung eines Parksperrenrads geschwenkt werden kann.

Ein derartiger Aufbau ist allerdings aufwendig. Zum einen wird sowohl für das Innere des Getriebegehäuses als auch für die Außenseite jeweils ein separater Kabelbaum benötigt. Darüber hinaus muss verhindert werden, dass durch Druckunterschiede zwischen dem Inneren des Getriebegehäuses und der Parkbremse Getriebeöl in die Parkbremse, insbesondere in deren elektrischen Antrieb, eindringt. Es ist daher bereits vorgeschlagen worden, ein Entlüftungsrohr von der Parkbremse durch das Getriebegehäuse nach außen zu führen. Allerdings verursacht eine derartige Ausgestaltung einen erhöhten baulichen Aufwand und somit zusätzliche Kosten.

Der Erfindung liegt die Aufgabe zugrunde, eine Parksperre für ein Kraftfahrzeug anzugeben, die einfach aufgebaut ist und eine zuverlässige Funktion sicherstellt.

Zur Lösung dieser Aufgabe ist bei einer Parksperre der eingangs genannten Art erfindungsgemäß vorgesehen, dass das Betätigungselement eine Exzenterwelle aufweist, die das Getriebegehäuse oder ein auf das Getriebegehäuse aufgesetztes Parksperrengehäuse durchsetzt, wobei die Exzenterwelle durch einen außerhalb des Getriebegehäuses oder des Parksperrengehäuses angeordneten elektrischen Antrieb drehbar ist.

Die Erfindung beruht auf der Erkenntnis, dass das Betätigungselement und dessen elektrischer Antrieb besonders zuverlässig vor dem Eindringen von Getriebeöl geschützt werden können, indem der Antrieb des Betätigungselements eine Exzenterwelle antreibt, die das Getriebegehäuse oder ein auf das Getriebegehäuse aufgesetztes Parksperrengehäuse durchsetzt. Somit befindet sich der Antrieb außerhalb des mit Öl gefüllten Getriebegehäuses. Darüber hinaus wird lediglich ein einziger Kabelbaum benötigt und eine aufwendige Entlüftung entfällt. Die erfindungsgemäße Parksperre ist einfach aufgebaut und gewährleistet eine zuverlässige Funktion. Ferner kann die Parksperre vormontiert werden und als Baueinheit an einem Getriebe montiert werden. Es ist jedoch auch möglich, das Getriebe ohne die Parksperre einzusetzen. In diesem Fall kann die für die Parksperre vorgesehene Öffnung in dem Getriebegehäuse mit einem Deckel oder dergleichen geschlossen werden.

Eine Variante der erfindungsgemäßen Parksperre sieht vor, dass die Exzenterwelle einen exzentrisch angeordneten Zapfen aufweist, der derart mit einem ersten Ende einer Druckstange gekoppelt ist, dass der Sperrbolzen bei einer Drehung der Exzenterwelle durch ein zweites Ende der Druckstange zum Parksperrenrad hin oder von dem Parksperrenrad weg bewegbar ist. Der Zapfen befindet sich an einer Axialseite der Exzenterwelle, d. h. gegenüberliegend zu der angetriebenen Seite. Der außerhalb der Drehachse angeordnete Zapfen wird bei einer Drehung der Exzenterwelle auf einer Kreisbahn bewegt.

Der Sperrbolzen kann eine schräge Fläche aufweisen, die zum Beaufschlagen des Sperrbolzens mit dem zweiten Ende der Druckstange in Kontakt ist. Zur Betätigung der Parksperre kann das zweite Ende der Druckstange, d. h. das freie Ende, den Sperrbolzen verschieben, um diesen in Richtung des Parksperrenrads zu drücken. Wenn die Druckstange durch das Betätigungselement bewegt wird, berührt das freie Ende der Druckstange den Sperrbolzen und drückt dessen freies Ende gegen die Kraft eines Federelements aus dem Parksperrengehäuse nach außen, bis der Sperrbolzen sich in der Ausnehmung des Parksperrenrads befindet und dieses blockiert. Durch die schräge Fläche wird die durch die Druckstange übertragene Kraft um etwa 90° umgelenkt.

Eine Variante der Erfindung sieht vor, dass an dem zweiten, freien Ende der Druckstange zwei Rollen angeordnet sind, wobei eine erste Rolle derart angeordnet ist, dass sie bei einer Bewegung der Druckstange an der Innenseite des Parksperrengehäuses abwälzt und/oder wobei eine zweite Rolle derart angeordnet ist, dass sie bei einer Bewegung der Druckstange zum Beaufschlagen des Sperrbolzens auf der schrägen Fläche des Sperrbolzens abwälzt. Es wird bevorzugt, dass die Druckstange sowohl die erste als auch die zweite Rolle aufweist. Die Innenseite des Parksperrengehäuses, entlang der sich die erste Rolle abwälzt, kann durch eine Metallplatte verstärkt sein. Die erste Rolle und/oder die zweite Rolle bewirken, dass der Kontakt zwischen der Druckstange und der Innenseite des Parksperrengehäuses bzw. der Kontakt zwischen der Druckstange und dem Sperrbolzen in Form einer reibungsarmen Wälzbewegung stattfindet.

Es kann auch vorgesehen sein, dass die Druckstange und eine Halterung für die erste und/oder die zweite Rolle fest miteinander verbunden sind und dass zwischen der mit der Druckstange verbundenen Halterung und einer Führung ein diese auseinander drängendes Federelement angeordnet ist. Das Federelement stützt sich einerseits im Bereich eines ersten Endes der Führung und andererseits an der Halterung ab. Auf diese Weise ist sichergestellt, dass die einerseits fest mit der Exzenterwelle verbundene Druckstange mit ihrem freien Ende, d. h. mit den an der Halterung befestigten Rollen, gegen eine Innenfläche des Parksperrengehäuses gedrückt wird.

Eine alternative Variante der Erfindung sieht vor, dass an dem zweiten Ende der Druckstange eine konische Hülse angeordnet ist, die derart geformt ist, dass sie bei einer Bewegung der Druckstange in Richtung des Sperrbolzens auf dessen schräger Fläche gleitet und den Sperrbolzen zum Parksperrenrad hin verschiebt. Diese Variante zeichnet sich durch eine reduzierte Anzahl von Einzelteilen aus und kann kostengünstig hergestellt werden.

In ähnlicher Weise wie die zuerst beschriebene Variante kann zwischen der mit der Druckstange verbundenen konischen Hülse und einer Führung ein diese Komponenten auseinander drängendes Federelement angeordnet sein. Das Federelement drückt die Druckstange und die Führung auseinander, sodass die konische Hülse in Abhängigkeit der Stellung der Exzenterwelle den federnd gelagerten Sperrbolzen in Richtung des Parksperrenrads drückt.

Es liegt auch im Rahmen der Erfindung, dass eine Führung der Druckstange eine Ausnehmung aufweist, in der der exzentrisch an einer Axialseite der Exzenterwelle angeordnete Zapfen aufgenommen ist. Die Ausnehmung kann an einer Seite der Druckstange angeordnet und kreisförmig oder als Langloch ausgebildet sein.

Bei der erfindungsgemäßen Parksperre kann dem Sperrbolzen ein Federelement zugeordnet sein, das den Sperrbolzen in eine vom Parksperrenrad beabstandete Position drängt. Das Federelement stützt sich einerseits an einer umlaufenden Stufe des Sperrbolzens und andererseits an dem Parksperrengehäuse ab.

Die Exzenterwelle befindet sich im montierten Zustand teilweise innerhalb des Parksperrengehäuses, das an dieser Stelle eine Dichtung, insbesondere eine Flüssigkeitsdichtung, aufweisen kann. Der mechanische Teil der Parksperre und der elektrische Teil der Parksperre, d.h. der elektrische Antrieb, sind somit durch die Dichtung getrennt. Das mechanische Teil der Parksperre kann in Verbindung mit der inneren Atmosphäre des Getriebegehäuses sein, während das Getriebeöl oder die innere Atmosphäre des Getriebegehäuses den Antrieb nicht erreichen können.

Eine Variante der erfindungsgemäßen Parksperrengehäuse sieht vor, dass das Parksperrengehäuse, das den Sperrbolzen enthält und das von der Exzenterwelle durchsetzt wird, keine Dichtung, insbesondere keine Flüssigkeitsdichtung, zum Innenraum des Getriebegehäuses aufweist. Dadurch wird der Aufbau des Getriebes vereinfacht.

Eine weitere Variante der erfindungsgemäßen Parksperre sieht vor, dass das den Sperrbolzen enthaltende Parksperrengehäuse, das von der Exzenterwelle durchsetzt wird, ein erstes Parksperrengehäuse bildet, wobei die Parksperre ein zweites Parksperrengehäuse aufweist, das den elektrischen Antrieb enthält. Die Exzenterwelle befindet sich teilweise in dem ersten Parksperrengehäuse und teilweise in dem zweiten Parksperrengehäuse. Die Parksperre bildet somit eine einzige Einheit, die einfach zu handhaben ist. Vorzugsweise sind das erste und das zweite Parksperrengehäuse miteinander montiert. Das erste und das zweite Parksperrengehäuse sind gegeneinander abgedichtet.

Daneben betrifft die Erfindung ein Getriebe, das eine Parksperre der beschriebenen Art umfasst. wobei das Parksperrengehäuse an einer Außenwand des Getriebes angeordnet ist, so dass das Arretierungsmittel die Außenwand des Getriebes durchsetzt und zum Beaufschlagen des innerhalb des Getriebes angeordneten Parksperrenrads ausgebildet ist.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1:: eine geschnittene Ansicht eines ersten Ausführungsbeispiels einer erfindungsgemäßen Parksperre;
- Fig. 2:: einen Schnitt entlang der Linie II-II von Fig. 1;
- Fig. 3:: eine perspektivische Ansicht eines Parksperrengehäuses;
- Fig. 4:: eine perspektivische Ansicht eines Sperrbolzens der Parksperre;
- Fig. 5:: eine perspektivische Ansicht einer Exzenterwelle der Parksperre; und
- Fig. 6:: ein zweites Ausführungsbeispiel einer erfindungsgemäßen Parksperre in einer geschnittenen Ansicht.

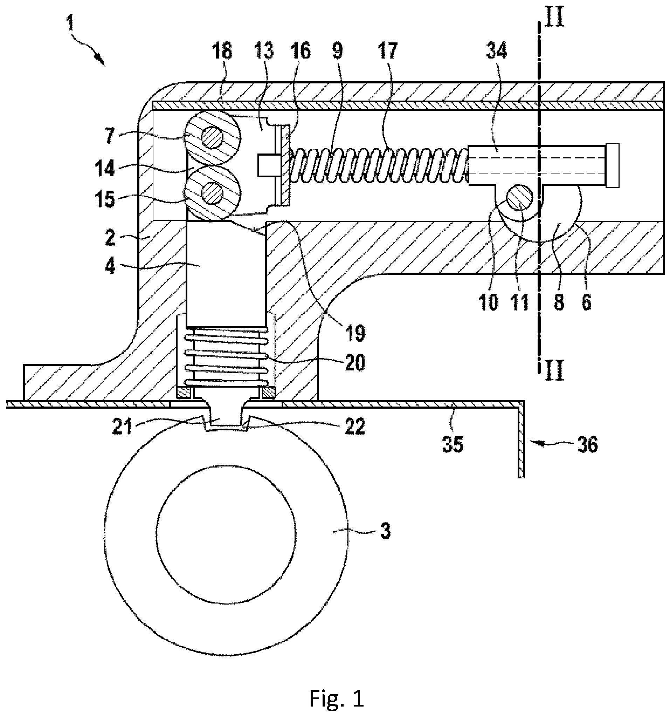

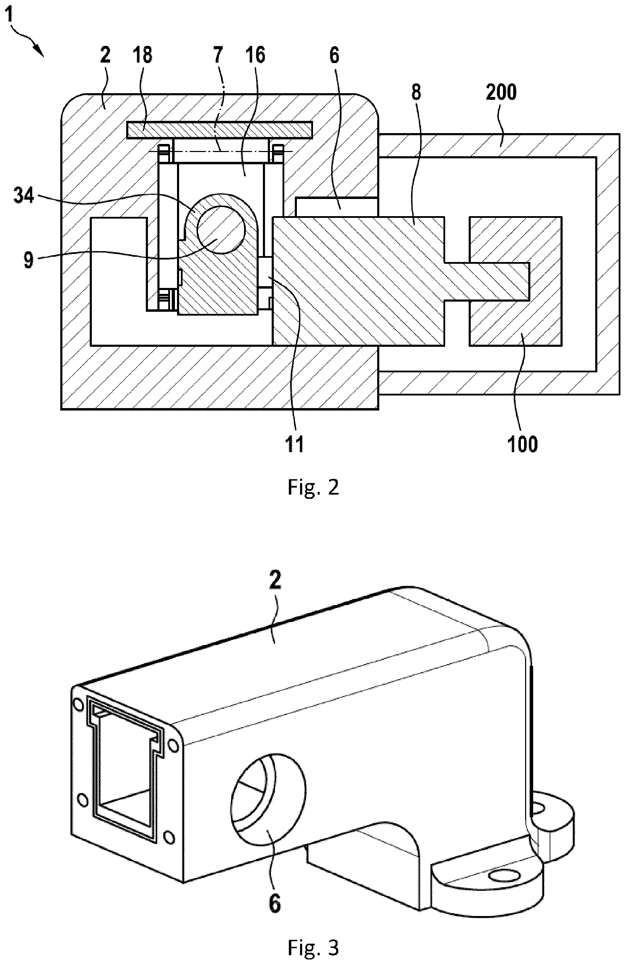

Die Fig. 1 und 2 zeigen ein erstes Ausführungsbeispiel einer Parksperre 1, wobei Fig. 1 eine geschnittene Seitenansicht und Fig. 2 einen Schnitt entlang der Linie II-II von Fig. 1 zeigt. Die Schnittebene von Fig. 1 befindet sich an verschiedenen Tiefen. Die Parksperre 1 ist mindestens teilweise in einem Parksperrengehäuse 2 aufgenommen, das wiederum an einer Öffnung eines Getriebegehäuses 35 eines Getriebes 36 angebracht werden kann.

Das Parksperrengehäuse 2 ist in Fig. 3 in einer perspektivischen Ansicht dargestellt.

Die Parksperre 1 umfasst ein bewegbares Arretierungsmittel zum Beaufschlagen eines im Inneren eines Getriebegehäuses 35 angeordneten Parksperrenrads 3 mit einer Haltekraft. Das bewegbare Arretierungsmittel ist als federnd gelagerter Sperrbolzen 4 ausgebildet. Der Sperrbolzen 4 kann in eine Nut 22 eines Parksperrenrads 3 bewegt werden, das im Inneren des Getriebegehäuses 35 angeordnet ist. Dazu weist die Parksperre 1 eine das Parksperrengehäuse 2 durchsetzende Exzenterwelle 8 auf, die durch einen außerhalb des Parksperrengehäuses 2 angeordneten, schematisch dargestellten, Antrieb 100 drehbar ist.

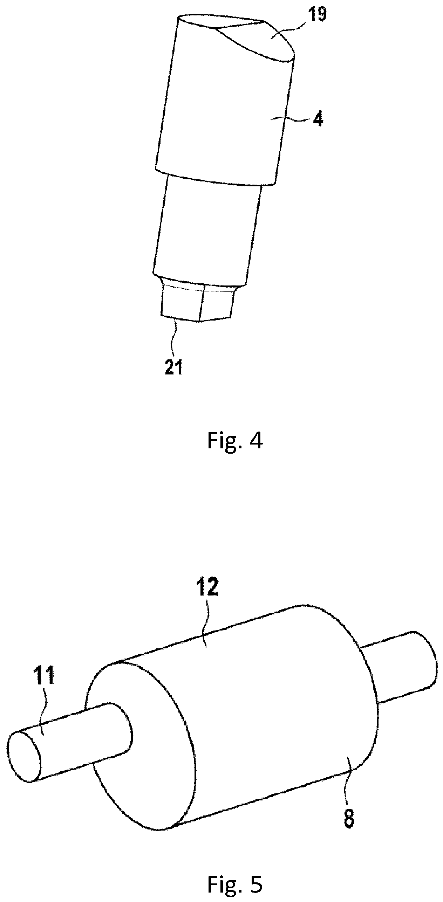

Fig. 5 zeigt die Exzenterwelle 8 in einer perspektivischen Ansicht. Die in Fig. 5 rechte Seite ist die Antriebsseite, die Exzenterwelle 8 ist an der rechten Seite mit einem nicht dargestellten elektrischen Antrieb verbunden. Ein zylinderförmiger mittlerer Abschnitt 12 der Exzenterwelle 8 durchsetzt das Parksperrengehäuse 2. Der axial abstehende Zapfen 11 ist ebenfalls zylinderförmig ausgebildet und exzentrisch an einer Axialseite des mittleren Abschnitts 12 angeordnet. Bei einer Drehung der Exzenterwelle 8 bewegt sich der Zapfen 11 somit auf einer Kreisbahn. Der Zapfen 11 ist in einer kreisförmigen Ausnehmung 10 aufgenommen, die Bestandteil einer Führung 34 ist. In der Führung 34 ist das rechte Ende der Druckstange 9 aufgenommen. Die Druckstange 9 ist jedoch nicht fest mit der Führung verbunden. Bei montierter Parksperre 1, wie in Fig. 1 dargestellt, wird bei einer Drehung der Exzenterwelle 8 die Druckstange 9 entlang einer kreissegmentförmigen Bahn gedreht.

Die Druckstange 9 weist an ihrem der Ausnehmung 10 entgegengesetzten Ende eine Halterung 13 auf, die einen ersten Abschnitt 14 umfasst, an dem zwei Rollen 7, 15 drehbar gelagert sind. Die Druckstange 9 und die Halterung 13 sind fest miteinander verbunden. Die Drehachse der Rollen 7, 15 ist parallel zur Drehachse des Parksperrenrads 3 angeordnet oder parallel zu einer Endfläche des Sperrbolzens 4, auf der die Rolle 15 läuft. Die Halterung 13 weist zusätzlich einen abgewinkelten zweiten Abschnitt 16 mit einer Öffnung auf, die von der Druckstange 9 durchsetzt wird.

Ein Federelement 17, das als Spiraldruckfeder ausgebildet ist, umgibt die Druckstange 9 und stützt sich einerseits an dem abgewinkelten zweiten Abschnitt 16 und andererseits an der Führung 34, die die Druckstange 9 umgibt, ab. Das Federelement 17 drängt die Druckstange 9 und die Führung 34 auseinander.

Die Drehachsen der beiden Rollen 7, 15 sind näherungsweise entlang der Bewegungsrichtung des Sperrbolzens 4 angeordnet. Die Rolle 7 wälzt auf einer aus Metall hergestellten Platte 18 ab, die an der Innenseite des Parksperrengehäuses 2 angeordnet ist. Die andere Rolle 15 berührt das innere, obere Ende des Sperrbolzens 4.

Der Sperrbolzen 4 weist an seiner zum Zapfen 11 hin weisenden und vom Parksperrenrad 3 abgewandten Oberseite eine schräge Fläche 19 auf, die mit der Rolle 15 in Kontakt ist. Anstelle einer schrägen Fläche kann der Sperrbolzen 4 auch eine ähnliche, z. B. abgerundete Kontur aufweisen. Der Sperrbolzen 4 wird durch die Kraft eines als Schraubendruckfeder ausgebildeten Federelements 20 beaufschlagt, die sich einerseits im Bereich der Öffnung des Parksperrengehäuses 2 und andererseits an einer Axialfläche des Sperrbolzens 4 abstützt. Wenn der Sperrbolzen 4 nicht durch die Rolle 15 beaufschlagt wird, drückt die Schraubendruckfeder den Sperrbolzen 4 von dem Parksperrenrad 3 weg in Richtung des Parksperrengehäuses 2, so dass die Parksperre 1 gelöst ist.

Die Funktion der Parksperre 1 ist wie folgt: Im inaktiven, ungebremsten Zustand der Parksperre 1 befindet sich der Zapfen 11 rechts von der Linie II-II von Fig. 1. In diesem Zustand befindet sich die Rolle 15 oberhalb der schrägen Fläche 19 des Sperrbolzens 4. Durch die Kraft des als Schraubendruckfeder ausgebildeten Federelements 20 wird der Sperrbolzen 4 in Richtung des Parksperrengehäuses 2 und weg vom Parksperrenrad 3 gedrückt. Das äußere, freie Ende 21 des Sperrbolzens 4 ragt nicht in die Nut 22 am Umfang des Parksperrenrads 3 hinein, sodass dieses frei gedreht werden kann. In diesem Zustand ist die Parksperre 1 nicht aktiv.

Wenn ausgehend von diesem nicht aktiven Zustand die Exzenterwelle 8 und damit der Zapfen 11 im Uhrzeigersinn um etwa 180° gedreht wird, wird die Druckstange 9 in die in Fig. 1 gezeigte linke Position verschoben. Durch das Federelement 17 wird die fest mit der Druckstange 9 verbundene Halterung 13 mit den Rollen 7, 15 dabei ebenfalls in der Ansicht von Fig. 1 nach links verschoben. Die obere Rolle 7 wälzt auf der Platte 18 ab. Die untere Rolle 15 wälzt auf der schrägen Fläche 19 ab, bis sie sich auf der benachbarten ebenen Fläche befindet, wie in Fig. 1 gezeigt ist. Erst wenn sich die untere Rolle 15 auf der ebenen Fläche befindet, ist das Parksperrenrad 3 gesperrt. Dabei wird der Sperrbolzen 4 gegen die Kraft des Federelements 20 aus dem Parksperrengehäuse 2 nach außen, in der Ansicht von Fig. 1 nach unten, bewegt, bis sich sein freies Ende 21 in der Nut 22 des Parksperrenrads 3 befindet. In diesem Zustand blockiert der Sperrbolzen 4 eine Bewegung des Parksperrenrads 3, d. h. die Parksperre 1 ist aktiviert.

Zum Lösen der Parksperre wird die Exzenterwelle 8 wieder um etwa 180° in die entgegengesetzte Richtung, d. h. gegen den Uhrzeigersinn gedreht, wodurch die Druckstange 9 nach rechts bewegt wird, sodass der Sperrbolzen 4 unter der Wirkung der in dem als Schraubendruckfeder ausgebildeten Federelement 20 gespeicherten Energie nach oben, d. h. von dem Parksperrenrad 3 weg bewegt wird, sodass dieses freigegeben wird. Die Parksperre ist dann gelöst.

In der perspektivischen Ansicht von Fig. 3 erkennt man, dass das Parksperrengehäuse 2 eine kreisförmige Ausnehmung 6 für die Exzenterwelle 8 aufweist. Das Parksperrengehäuse 2 kann an dieser Stelle eine Dichtung aufweisen. Das Parksperrengehäuse 2 kann mittels Schrauben auf einer Öffnung des Getriebegehäuses 35 eines Getriebes 36 befestigt werden. Falls an dieser Stelle keine Parksperre benötigt wird, kann die Öffnung mit einem Deckel verschlossen werden.

Der in Fig. 4 in einer perspektivischen Ansicht gezeigte Sperrbolzen 4 weist etwa in der Mitte eine umlaufende Stufe auf, an der sich ein Ende der Schraubendruckfeder 20 abstützt. Sein freies Ende 21, d. h. das in Fig. 4 untere Ende, weist einen verringerten Durchmesser und eine an die Geometrie der Nut 22 des Parksperrenrads 3 angepasste Form auf, sodass das freie Ende 21 des Sperrbolzens 4 in die Nut 22 des Parksperrenrads 3 bewegt werden kann. Der Sperrbolzen 4 kann optional mit einer Führungshülse versehen sein, die die Außenseite des Sperrbolzens 4 umgibt. Eine Führungshülse dient der Verringerung der Reibung zwischen dem Sperrbolzen 4 und der Innenseite des Parksperrengehäuses 2.

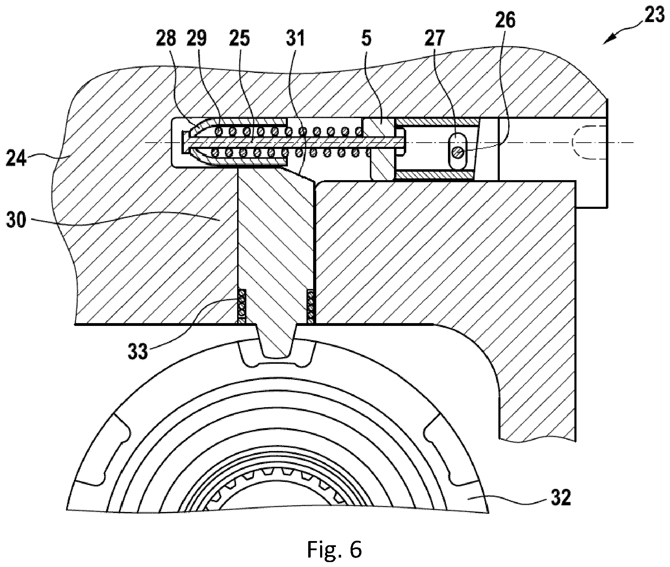

Fig. 6 zeigt ein zweites Ausführungsbeispiel einer Parksperre in einer geschnittenen Ansicht. Diejenigen Komponenten, die mit denjenigen des ersten Ausführungsbeispiels übereinstimmen, werden an dieser Stelle nicht nochmals im Detail erläutert. Die Parksperre 23 befindet sich in einem Parksperrengehäuse 24 und umfasst eine Druckstange 25, deren eines Ende mit einem Zapfen 26 einer Exzenterwelle 27 gekoppelt ist. An dem entgegengesetzten, in Fig. 6 linken Ende der Druckstange 25 ist eine konische Hülse 28 angeordnet. Die Druckstange 25 und die konische Hülse 28 sind fest miteinander verbunden. Ein als Schraubendruckfeder 29 ausgebildetes Federelement ist zwischen der Druckstange 25 und einer Führung 5 angeordnet.

Mit ihrer Außenseite berührt die konische Hülse 28 einen federbelasteten Sperrbolzen 30. Der Sperrbolzen 30 weist in Übereinstimmung mit dem ersten Ausführungsbeispiel eine schräge Fläche 31 auf. Beim Aktivieren der Parksperre 23, d. h. wenn die Exzenterwelle 27 gedreht und die Druckstange 25 in der Ansicht von Fig. 6 nach links verschoben wird, läuft die konische Hülse 28 auf die schräge Fläche 31 auf und drückt den Sperrbolzen 30 entgegen der Kraft eines Federelements 33 aus dem Parksperrengehäuse 24 in Richtung eines Parksperrenrads 32 heraus, in der Ansicht von Fig. 6 nach unten. In diesem Zustand, d. h. bei herausgedrückten Sperrbolzen 30, ist das Parksperrenrad 32 blockiert und die Parksperre aktiviert. Durch Umkehren der Drehbewegung des Zapfens 26 kann die Druckstange 25 wieder nach rechts verschoben werden, sodass der Sperrbolzen 30 unter der Wirkung der in dem Federelement 33 gespeicherten Energie von dem Parksperrenrad 32 weg in das Parksperrengehäuse 24 hinein gedrückt wird, wodurch die Parksperre 23 deaktiviert wird.

Zusätzlich zu dem Parksperrengehäuse 2, das ein erstes Parksperrengehäuse bildet, kann die Parksperre 1 ein weiteres Parksperrengehäuse 200 aufweisen, das den elektrischen Antrieb 100 enthält. Dann befindet sich die Exzenterwelle 8 teilweise in dem ersten Parksperrengehäuse 2 und teilweise in dem zweiten Parksperrengehäuse 200. Das erste und das zweite Parksperrengehäuse 2, 200 können miteinander montiert und verbunden werden, zum Beispiel mittels Schrauben. Zwischen dem ersten Parksperrengehäuse 2 und dem zweiten Parksperrengehäuse 200 kann eine Dichtung angeordnet sein, die die Atmosphäre der beiden Parksperrengehäuse 2, 200 voneinander trennt. Zusätzlich kann die innere Atmosphäre des ersten Parksperrengehäuses 2 in Verbindung mit der inneren Atmosphäre des Getriebegehäuses 35 bzw. des Getriebes 36 sein, ohne dass eine Dichtung oder eine Flüssigkeitsdichtung vorhanden ist.

### Bezugszeichenliste

- 1: Parksperre
- 2: Parksperrengehäuse
- 3: Parksperrenrad
- 4: Sperrbolzen
- 5: Führung
- 6: Ausnehmung
- 7: Rolle
- 8: Exzenterwelle
- 9: Druckstange
- 10: Ausnehmung
- 11: Zapfen
- 12: mittlerer Abschnitt
- 13: Halterung
- 14: erster Abschnitt
- 15: Rolle
- 16: zweiter Abschnitt
- 17: Federelement
- 18: Platte
- 19: schräge Fläche
- 20: Federelement
- 21: freies Ende
- 22: Nut
- 23: Parksperre
- 24: Parksperrengehäuse
- 25: Druckstange
- 26: Zapfen
- 27: Exzenterwelle
- 28: konische Hülse
- 29: Federelement
- 30: Sperrbolzen
- 31: schräge Fläche
- 32: Parksperrenrad
- 33: Federelement
- 34: Führung
- 35: Getriebegehäuse
- 36: Getriebe
- 100: elektrischer Antrieb
- 200: Parksperrengehäuse

## Patentansprüche

1. Parksperre (1, 23) für ein Kraftfahrzeug, mit einem bewegbaren Arretierungsmittel zum Beaufschlagen eines im Inneren eines Getriebegehäuses (35) angeordneten Parksperrenrads (3, 32) mit einer Haltekraft, wobei das bewegbare Arretierungsmittel als Sperrbolzen (4, 30) ausgebildet ist, der in eine Ausnehmung des Parksperrenrads (3, 32) bewegbar ist, **dadurch gekennzeichnet, dass** die Parksperre (1, 23) eine ein Parksperrengehäuse (2, 24) durchsetzende Exzenterwelle (8, 27) aufweist, die durch einen außerhalb des Parksperrengehäuses (2, 24) angeordneten elektrischen Antrieb (100) drehbar ist.

2. Parksperre nach Anspruch 1, wobei die Exzenterwelle (8, 27) einen exzentrisch angeordneten Zapfen (11, 26) aufweist, der derart mit einem ersten Ende einer Druckstange (9, 25) gekoppelt ist, dass der Sperrbolzen (4, 30) bei einer Drehung der Exzenterwelle (8, 27) durch ein zweites Ende der Druckstange (9, 25) zum Parksperrenrad (3, 32) hin oder von dem Parksperrenrad (3, 32) weg bewegbar ist.

3. Parksperre nach Anspruch 2, wobei der Sperrbolzen (4, 30) eine schräge Fläche (19, 31) aufweist, die zum Beaufschlagen des Sperrbolzens (4, 30) mit dem zweiten Ende der Druckstange (9) in Kontakt ist.

4. Parksperre nach Anspruch 3, wobei an dem zweiten Ende der Druckstange (9) zwei Rollen (7, 15) angeordnet sind, wobei eine erste Rolle (7) derart angeordnet ist, dass sie bei einer Bewegung der Druckstange (9) an der Innenseite eines Parksperrengehäuses (2) abwälzt und/oder wobei eine zweite Rolle (15) derart angeordnet ist, dass sie bei einer Bewegung der Druckstange (9) zum Beaufschlagen des Sperrbolzens (4, 30) auf der schrägen Fläche (19) des Sperrbolzens (4) abwälzt.

5. Parksperre nach Anspruch 4, wobei die Druckstange (9) und eine Halterung (13) für die erste Rolle (7) und/oder die zweite Rolle (15) fest miteinander verbunden sind wobei zwischen der mit der Druckstange (9) verbundenen Halterung (13) und einer Führung (34) ein diese auseinander drängendes Federelement (17) angeordnet ist.

6. Parksperre nach Anspruch 3, wobei an dem zweiten Ende der Druckstange (25) eine konische Hülse (28) angeordnet ist, die derart geformt ist, dass sie bei einer Bewegung der Druckstange (25) in Richtung des Sperrbolzens (30) auf dessen schräger Fläche (31) gleitet und den Sperrbolzen (30) zum Parksperrenrad (32) hin verschiebt.

7. Parksperre nach Anspruch 6, wobei zwischen der mit der Druckstange (25) verbundenen konischen Hülse (28) und einer Führung (5) ein diese Komponenten auseinander drängendes Federelement (29) angeordnet ist.

8. Parksperre nach Anspruch 5 oder 7, wobei die Führung (5, 34) eine Ausnehmung (10) aufweist, in der der exzentrisch an einer Axialseite der Exzenterwelle (8, 27) angeordnete Zapfen (11, 26) aufgenommen ist.

9. Parksperre nach einem der vorangehenden Ansprüche, wobei dem Sperrbolzen (4, 30) ein Federelement (20, 33) zugeordnet ist, das den Sperrbolzen (4, 30) in eine vom Parksperrenrad (3, 32) beabstandete Position drängt.

10. Parksperre nach einem der vorangehenden Ansprüche, wobei sich die Exzenterwelle (8, 27) im montierten Zustand teilweise innerhalb des Parksperrengehäuses (2) befindet, und wobei das Parksperrengehäuse (2) an dieser Stelle eine Dichtung aufweist.

11. Parksperre nach Anspruch 10, wobei das den Sperrbolzen (4, 30) enthaltende Parksperrengehäuse (2), das von der Exzenterwelle (8, 27) durchsetzt wird, keine Flüssigkeitsdichtung zum Innenraum des Getriebegehäuses (35) aufweist.

12. Parksperre nach einem der vorangehenden Ansprüche, wobei das den Sperrbolzen (4, 30) enthaltende Parksperrengehäuse (2), das von der Exzenterwelle (8, 27) durchsetzt wird, ein erstes Parksperrengehäuse (2) bildet, wobei die Parksperre (1, 23) ein zweites Parksperrengehäuse (200) aufweist, das den elektrischen Antrieb (100) enthält, wobei die Exzenterwelle (8, 27) sich teilweise in dem ersten Parksperrengehäuse (2) und teilweise in dem zweiten Parksperrengehäuse (200) befindet.

13. Getriebe (36), umfassend eine Parksperre (1, 23) nach einem der vorangehenden Ansprüche, wobei das Parksperrengehäuse (2, 24) an einer Außenseite eines Getriebegehäuses (35) angeordnet ist, so dass das Arretierungsmittel die Außenseite des Getriebegehäuses (35) durchsetzt und zum Beaufschlagen des innerhalb des Getriebegehäuses (35) angeordneten Parksperrenrads (3, 32) ausgebildet ist.
